# EUROPÄISCHE PATENTSCHRIFT

(11) **EP 3 374 684 B1**
(45) Veröffentlichungstag und Bekanntmachung des Hinweises auf die Patenterteilung: **20.04.2022**
(21) Anmeldenummer: 16787408.0
(22) Anmeldetag: 24.10.2016
(51) Int. Cl.: F17C 1/00, F17C 13/04, F17C 13/12

(54) **KRAFTFAHRZEUG MIT EINEM DRUCKTANK UND EINER SICHERHEITSVENTIL-EINRICHTUNG**
MOTOR VEHICLE WITH A PRESSURE TANK AND A SAFETY VALVE DEVICE
VÉHICULE À MOTEUR DOTÉ D'UN RÉSERVOIR SOUS PRESSION ET D'UN DISPOSITIF CLAPET DE SÉCURITÉ

(30) Priorität: 11.11.2015 DE 102015222251
(43) Veröffentlichungstag der Anmeldung: 19.09.2018
(73) Patentinhaber: Bayerische Motoren Werke Aktiengesellschaft, 80809 München (DE)
(72) Erfinder: KUNBERGER, Jan-Mark, 81241 München (DE)
(86) Internationale Anmeldenummer: PCT/EP2016/075521
(87) Internationale Veröffentlichungsnummer: WO 2017/080802

(56) Entgegenhaltungen:
- DE-A1-102010 006 518
- DE-A1-102011 119 668
- DE-A1-102014 003 586
- DE-A1-102014 205 712
- DE-U1-202004 021 365

## Beschreibung

### Einrichtung

Die Erfindung betrifft ein Kraftfahrzeug mit einem Drucktank, in welchem ein Energieträger zur Versorgung zumindest eines letztlich dem Antrieb des Fahrzeugs dienenden Energiewandlers unter hohem Druck in der Größenordnung von 300 bar und mehr speicherbar ist, welcher Drucktank eine Sicherheits-Entlastungseinrichtung aufweist, welche bei Vorliegen eines kritischen Zustands, insbesondere bei hohen bspw. bei einem Brand auftretenden Temperaturen, öffnet oder geöffnet wird und zumindest eine Teilmenge des gespeicherten Brennstoffs aus dem Tank entweichen lässt. Zum Stand der Technik wird beispielshalber auf die DE 11 2008 003 549 T5 verwiesen. Die Dokumente DE 10 2014 205712 und DE 10 2010 06518 zeigen Kraftfahrzeuge mit einem eingebauten Drucktank. Hochdrucktanks für Fahrzeuge, in denen bspw. Wasserstoff (als Energieträger für einen Energiewandler für die Erzeugung von Antriebsenergie) gespeichert wird, müssen im Fall eines Fahrzeug-Brandes entlastet werden, um keine sicherheitskritische Situation entstehen zu lassen. Hierfür wird ggf. zumindest eine Teilmenge des gespeicherten Wasserstoffs rechtzeitig und gezielt über eine hier sog. Sicherheits-Entlastungseinrichtung, die auch als Sicherheitsventil-Einrichtung und in Fachkreisen als TPRD bezeichnet wird, in die Umgebung abgeblasen. Die Wand oder Struktur eines Fahrzeug-Drucktanks könnte aber auch bei einem Unfall des Fahrzeugs soweit beschädigt werden, dass dieser Tank zwar zunächst noch den darin unter hohem Druck gespeicherten Energieträger halten kann, dass jedoch irgendwelche Bergungsmaßnahmen, die am verunfallten Fahrzeug durchgeführt werden, eine weitere geringfügige Schädigung der Tank-Struktur hervorrufen könnten, welche dann zu einem Bersten des Tanks führen könnten und damit Rettungs- oder Bergungskräfte, d.h. Menschen, die am verunfallten Fahrzeug hantieren, gefährden könnten. Wünschenswert wäre es daher, an einem verunfallten Kraftfahrzeug einen in diesem vorhandenen Drucktank aus sicherer Entfernung entlasten zu können, d.h. den im Drucktank gespeicherten Energieträger auf einfache und sichere Weise zumindest anteilig aus dem Tank abführen zu können. Vergleichbares gilt, wenn der Drucktank aufgrund irgendeiner Fremdeinwirkung, bei welcher es sich nicht zwangsweise um einen Unfall im eigentlichen Sinne handeln muss, geschädigt worden sein könnte.

Aufgabe der Erfindung ist es daher, eine Maßnahme aufzeigen, wie ein Drucktank eines Kraftfahrzeugs, bei welchem es sich im Übrigen auch um einen Kryo-Drucktank handeln kann, in welchem insbesondere kryogener Wasserstoff im überkritischen Zustand unter hohem Druck gespeichert werden kann, auf sichere Weise entlastet werden kann, falls das Fahrzeug in einen (schwereren) Unfall verwickelt ist oder eine sonstige nicht bereits durch die derzeitigen TPRDs abgesicherte Fremdeinwirkung auf den Drucktank stattgefunden haben könnte.

Die Lösung dieser Aufgabe ergibt sich mit den Merkmalen des Anspruchs 1, d.h. ist für ein Kraftfahrzeug nach dem Oberbegriff des Anspruchs 1 dadurch gekennzeichnet, dass das Kraftfahrzeug zumindest eine Anschlussmöglichkeit für eine externe Fluiddruckquelle sowie einen durch eine angeschlossene Fluiddruckquelle betätigbaren Manipulator aufweist, welcher mit Betätigung ein Öffnen der Sicherheits-Entlastungseinrichtung bewirkt, und wobei der Manipulator ausgebildet ist, die in der Wand des Tanks verschraubte Sicherheits-Entlastungseinrichtung aufzuschrauben. Vorteilhafte Aus- und Weiterbildungen sind Inhalt der Unteransprüche.

Vorgeschlagen ist eine vorzugsweise hydraulisch und allgemein mittels eines Fluiddrucks betätigte Vorrichtung (= sog. Manipulator), die/der im Kraftfahrzeug fest installiert ist und die bzw. der dann, wenn ein Hydraulikmedium unter Druck bzw. allgemein ein Fluiddruck an diese Vorrichtung angelegt wird, den Drucktank bzw. dessen bspw. im Falle eines geeignet gestalteten TPRD's ohnehin bereits vorhandene Sicherheits-Entlastungseinrichtung soweit öffnet, dass zumindest eine ausreichende Teilmenge des im Drucktank befindlichen Energieträgers (insbesondere Wasserstoffs) aus dem Tank entweichen kann. Das zum Öffnen der Sicherheits-Entlastungseinrichtung von der besagten Vorrichtung bzw. dem später noch weiter erläuterten Manipulator benötigte Hydraulikmedium kann dabei von heute üblichen Feuerwehr- oder Bergungsfahrzeugen einfach zur Verfügung gestellt werden, da solche Rettungsfahrzeuge regelmäßig mit Hydraulikpumpen ausgerüstet sind, um bspw. hydraulische Spreizer oder Scheren (als Bestandteil eines üblichen sog. hydraulischen Rettungssatzes) betreiben zu können. Ausdrücklich darauf hingewiesen sei, dass ein erfindungsgemäßer Manipulator nicht nur auf eine bereits aus anderen Gründen vorhandene Sicherheits-Entlastungseinrichtung zugreifen kann, sondern dass am Drucktank eines erfindungsgemäßen Kraftfahrzeugs eine geeignet gestaltete Sicherheits-Entlastungseinrichtung vorgesehen ist, die auch nur speziell für diesen Manipulator gestaltet sein kann.

Ein erfindungsgemäßes Kraftfahrzeug besitzt beispielsweise an exponierter Stelle eine standardmäßige Hydraulikkupplung, an welche von einem Rettungs- oder Bergungstrupp eine mitgeführte Hydraulikpumpe angeschlossen werden kann, womit dann der Drucktank geöffnet werden könnte. Um jedoch irgendwelchen Missbrauch zu vermeiden, ist nach einer besonders bevorzugten Ausführungsform in einer von dieser Hydraulikkupplung (oder allgemein von einer Anschlussmöglichkeit für eine Fluiddruckquelle) zum Manipulator bzw. zu der im vorhergehenden Absatz genannten Vorrichtung führenden Fluidleitung ein üblicherweise geschlossenes Sperrventil vorgesehen, welches bspw. m Falle eines von einer (im Fahrzeug vorgesehenen) Steuereinheit erkannten Unfalls des Fahrzeugs durch diese Steuereinheit geöffnet wird. Als Unfall kann dabei jedes vom üblichen Betrieb des Kraftfahrzeugs abweichendes Ereignis verstanden werden, durch welches ein Drucktank des Fahrzeugs möglicherweise geschädigt werden könnte. Vorzugsweise handelt es sich bei der genannten Steuereinheit um eine elektronische Steuereinheit, welche im Falle eines mittels geeigneter Sensorik erkannten Unfalls des Fahrzeugs das Sperrventil in der zum Manipulator führenden Fluidleitung öffnet. Solche elektronischen Steuereinheiten einschließlich geeigneter Sensorik sind bekannt und in moderneren Kraftfahrzeugen standardmäßig verbaut, und zwar nicht nur, um selbsttätig Schutzeinrichtungen wie insbesondere Airbags zu aktivieren, sondern auch um im Falle eines schweren Unfalls des Fahrzeugs bspw. selbsttätig Rettungskräfte zu alarmieren - dabei wird üblicherweise eine Mobilfunkverbindung zu einer Rettungs- oder Dienstleistungszentrale hergestellt. Eine vergleichbare Steuereinheit ist nun in einem erfindungsgemäßen Kraftfahrzeug vorgesehen, um eine Fluidleitung freizuschalten, über welche mittels einer extern angeschlossenen Hydraulikpumpe oder dgl. die Sicherheits-Entlastungseinrichtung des Drucktanks zumindest partiell geöffnet werden kann. Dabei kann vorgesehen sein, dass die Steuereinheit mittels geeigneter Sensorik selbsttätigt festlegt, ob ein außergewöhnliches Ereignis, wie ein Unfall, überhaupt die Sicherheit des Drucktanks beeinträchtigt haben könnte. In diesem Sinne kann eine (beliebige) geeignete Sensorik vorgesehen sein, mit Hilfe derer die genannte Steuereinheit überprüfen und erkennen kann, ob der Drucktank aufgrund irgendeiner Fremdeinwirkung, bei welcher es sich nicht zwangsweise um einen Unfall im eigentlichen Sinne handeln muss, geschädigt worden sein könnte.

Was das von der Steuereinheit veranlasste Öffnen des genannten Sperrventils in besagter Fluidleitung betrifft, so kann dieses Öffnen elektrisch oder mechanisch erfolgen. Beispielsweise kann auch ein beim Auslösen bereits genannter (die Fahrzeuginsassen im Falle eines Fzg.-Crashs schützenden) Airbags kurzzeitig zur Verfügung stehender Überdruck dazu genutzt werden, auch das besagte Sperrventil in seine Offenstellung zu bringen.

Bereits genannt wurde eine Hydraulikkupplung bzw. zumindest eine sog. Anschlussmöglichkeit für eine Fluiddruckquelle in allgemeiner Form, welche an einer zugänglichen Stelle des Kraftfahrzeugs vorgesehen ist. Fakultativ vorgeschlagen wird weiterhin, zumindest zwei (oder noch mehrere) solcher Anschlussmöglichkeiten für eine externe Fluiddruckquelle, insbesondere Hydraulikpumpe, parallel geschaltet vorzusehen, da bspw. im Falle eines Überschlags des Fahrzeugs der Zugang zu einer der Anschlussmöglichkeiten blockiert sein könnte. Insbesondere wenn es vorgesehen ist, dass der besagte Manipulator (zum Öffnen der Sicherheits-Entlastungseinrichtung) hydraulisch betätigt wird und folglich eine extern anschließbare Hydraulikpumpe als Fluiddruckquelle vorgesehen ist, empfiehlt es sich, in der von deren Anschlussmöglichkeit am Fahrzeug zum fahrzeuginternen Manipulator führenden fahrzeugfesten Fluidleitung ein Entlüftungsventil oder eine vergleichbare Möglichkeit zum Ableiten von in der Fluidleitung befindlicher Luft vorzusehen, um im Bedarfsfall ein sicheres Arbeiten des Manipulators zu gewährleisten.

Nunmehr auf den besagten Manipulator eingehend handelt es sich hierbei um eine durch Fluiddruck und wegen der Zuverlässigkeit und der relativen hohen Kräfte, welche damit erzeugt werden können, insbesondere durch ein unter Druck gefördertes Hydraulikmedium in Funktion setzbare Vorrichtung, welche in allgemeinster Form ein irgendwie geartetes Öffnen der Sicherheitsventil-Vorrichtung veranlasst. Beispielsweise kann eine extern angeschlossene Hydraulikpumpe einen hydraulischen Aktor, wie bspw. einen Hydraulikzylinder als sog. Manipulator betreiben, der eine in die Tankwand eingeschraubte Sicherheits-Entlastungseinrichtung entgegen ihrer Montage-Schraubrichtung aufschraubt und auf diese Weise eine Druckentlastung im Tankvolumen herbeiführt. Dafür kann der Aktor oder Manipulator nach Art eines hydraulischen Kreiskolben-Zylinders gestaltet sein, wobei die Öffnungsschraubbewegung der Sicherheits-Entlastungseinrichtung dann besonders einfach umgesetzt werden kann, wenn diese Einrichtung mit einem sich zumindest näherungsweise über 360 Winkelgrade erstreckenden Gewindegang in der Tank-Wand verschraubt ist. Ein solcher relativ kurzer Gewindegang kann ggf. ausreichend sicher gestaltet werden, wenn für die genannte Verschraubung mehrere zueinander parallel geschaltete Gewindegänge, die sich jeweils über 360° erstrecken vorgesehen sind, wobei ein oder mehrere solcher Gewindegänge beim Öffnen durch den Manipulator nur eine relativ kurze und insbesondere einfach darstellbare Wegstrecke des Manipulators erfordert bzw. erfordern.

Es ist eine Sicherheits-Entlastungseinrichtung bekannt, bei welcher auf der Außenseite der Tankwand abschnittsweise eine Leitung geführt ist, die ein auf dieser Außenseite vorgesehenes Sicherheitsventil (bzw. TPRD) mit dem Speichervolumen des Tanks verbindet. Ist der Drucktank eines erfindungsgemäßen Kraftfahrzeugs solchermaßen gestaltet, so kann der erfindungsgemäße Manipulator auch ausgebildet sein, diese genannte VerbindungsLeitung aufzutrennen, bspw. aufzustechen oder aufzuschneiden, wonach durch die damit geschaffene Leckagestelle der im Tank gespeicherte Energieträger geeignet gedrosselt in die Umgebung gelangen kann bzw. abgeführt werden kann. Dabei muss ein beispielhaft genannter Schneide-Mechanismus nicht in der Lage sein, die genannte Leitung vollständig zu durchtrennen. Vielmehr ist es ausreichend, wenn in deren Wand eine Öffnung mit einem Querschnitt in der Größenordnung von 5 mm² eingebracht wird. Im Übrigen muss eine solche durch den Manipulator auftrennbare Leitung nicht zwangsweise zu einem Sicherheitsventil führen; vielmehr kann für die Umsetzung der vorliegenden Erfindung ein kurzer Leitungs-Abschnitt vorgesehen sein, der mit dem Speichervolumen des Drucktanks verbunden und außerhalb dessen liegend üblicherweise verschlossen ist. Im Bedarfsfall, d.h. wenn der Manipulator von extern aktiviert wird, öffnet oder zerstört dieser dann den besagten Leitungs-Abschnitt., welcher vorzugsweise durch die übliche Befüll- und Entnahmevorrichtung des Drucktanks hindurch in dessen Speichervolumen geführt ist.

Bekannt sind weiterhin Sicherheitsventil-Einrichtungen mit einer Thermoglasampulle, welche bei einem Brand geeignet reagiert und ein Sicherheitsventil öffnet. Ein erfindungsgemäßer Manipulator kann auch ausgelegt sein, diese Thermoglasampulle und zerstören, was dann das gewünschte Öffnen des Sicherheitsventils zur Folge hat. Selbstverständlich ist es auch möglich, dass der Manipulator einen bestimmten Anschnitt der Tankwand selbst durchbricht, welcher als Sicherheits-Entlastungseinrichtung im Sinne der vorliegenden Erfindung ausgebildet ist. Und was einen Mechanismus bzw. Manipulator zum vorstehend genannten Aufschneiden oder Aufstechen oder Zerstören betrifft, so ist dieser idealerweise solchermaßen ausgelegt und positioniert, dass ein unbeabsichtigtes bzw. fehlerhaftes Auslösen insbesondere durch einen kleineren Unfall des Fahrzeugs oder dgl. nicht möglich ist.

Im Folgenden wird die Erfindung anhand von Ausführungsbeispielen weiter erläutert, welche in den beigefügten Figuren jeweils stark abstrahiert und auf das Wesentliche beschränkt dargestellt sind. Eine erste Ausführungsform zeigt **Figur 1** mit einem Manipulator, welcher ausgelegt ist, eine Leitung aufzutrennen, während in **Figur 2** ein Manipulator zum Aufschrauben einer Sicherheits-Entlastungseinrichtung dargestellt ist, von welchem **Figur 3** eine Abwandlung zeigt. Figur 4 schließlich zeigt, dass auch ein hierfür speziell vorgesehener Leitungs-Abschnitt mittels eines Manipulators aufgetrennt werden kann. In allen Figuren sind gleiche Elemente mit den gleichen Bezugsziffern gekennzeichnet.

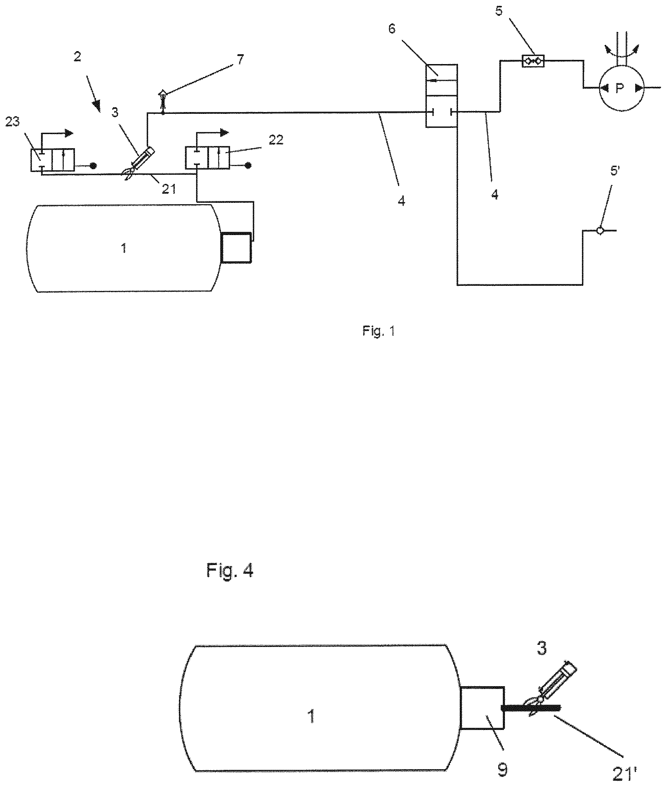

Zunächst auf **Fig.1** Bezug nehmend trägt ein Drucktank eines nicht weiter dargestellten Kraftfahrzeugs die Bezugsziffer 1. Eine dem Fachmann bekannte Sicherheits-Entlastungseinrichtung 2 dieses Drucktanks besteht hier aus einer in der Figur zwar beabstandet von der Tankwand gezeigten, tatsächlich jedoch an dieser entlang laufenden Leitung 21, von welcher ein in einem vorderen Bereich des zylindrischen und liegend im Fahrzeug verbauten Tanks 1 außenseitig an der Tankwand verbautes Ventil 22 sowie ein in einem hinteren Bereich des Tanks 1 an der Tankwand verbautes Ventil 23 abzweigt. Diese Leitung 21 ist ferner mit dem Speicherraum bzw. Speichervolumen des Tanks 1 verbunden, so dass dann, wenn eines der Ventile 22, 23 öffnet, durch dieses geöffnete Ventil 22 bzw. 23 das im Speichervolumen des Tanks 1 gespeicherte Energieträger-Medium, bei welchem es sich vorzugsweise um Wasserstoff handelt, in die Umgebung abgeführt werden kann. Auf den Öffnungsmechanismus für diese Ventile 22, 23, welche insbesondere bei einem Brand oder vergleichbar hohen Temperaturen öffnen sollen, wird vorliegend nicht weiter eingegangen, da dies nicht Inhalt der vorliegenden Erfindung ist. Vielmehr ist vorliegend (erfindungsgemäß) ein hydraulisch (bzw. allgemein durch Fluiddruck) betätigbarer Manipulator 3 vorgesehen, welcher hier in Form eines Schneide-Mechanismus bzw. in Form einer hydraulischen Schere ausgebildet ist, der/die fest im Fahrzeug installiert ist und der/die bei Beaufschlagung mit geeignetem Hydraulikdruck die Leitung 21 auftrennt, so dass dann (bspw.) Wasserstoff aus dem Tank 1 in die Umgebung gelangen kann.

Um diesen Manipulator 3 im Bedarfsfall in gewünschter Weise betätigen zu können, verläuft zu diesem eine Hydraulikleitung 4 (vor der Figurenbeschreibung als Fluidleitung bezeichnet), durch die von extern, d.h. von außerhalb des Fahrzeugs über eine am Fahrzeug vorgesehene Anschlussmöglichkeit 5 ein Hydraulikmedium unter höherem Druck zum Manipulator 3 herangeführt werden kann. Eine von außen an das Fahrzeug bzw. dessen Anschlussmöglichkeit 5 angeschlossene Hydraulikpumpe, welche allgemein auch als Fluiddruckquelle bezeichnet werden kann, ist abstrahiert dargestellt und mit dem Bezugszeichen P gekennzeichnet. Diese Fluiddruckquelle P oder Hydraulikpumpe P kann bspw. in einem Feuerwehrfahrzeug vorgesehen sein, welches dem erfindungsgemäßen Fahrzeug zu Hilfe kommt, falls dieses einen Unfall hatte. Neben derjenigen Anschlussmöglichkeit 5, an welche gemäß Fig.1 die Hydraulikpumpe P angeschlossen ist, weist das erfindungsgemäße Kraftfahrzeug noch eine weitere mit der Hydraulikleitung 4 (bzw. Fluidleitung 4) parallel verbundene Anschlussmöglichkeit 5' auf, die vorliegend ebenso wie die Anschlussmöglichkeit 5 als eine standardmäßige Hydraulikkupplung, welche ohne Anlegen von Hydraulikdruck geschlossen ist, ausgebildet ist.

In der Hydraulikleitung 4 ist zwischen den Anschlussmöglichkeiten 5, 5' und dem Manipulator 3 ein Sperrventil 6 vorgesehen, welches üblicherweise geschlossen ist und nur im Bedarfsfall, nämlich wenn das Kraftfahrzeug bspw. einen Unfall hatte oder wenn aufgrund einer sonstigen Fremdeinwirkung die Gefahr besteht, dass der Drucktank 1 ernsthaft geschädigt worden sein könnte, geöffnet wird. Die Funktion sowie eine mögliche Betätigung dieses Sperrventils 6 durch eine vorzugsweise elektronische Steuereinheit wurde vor der Figurenbeschreibung ausführlich erläutert. Bezüglich der Förderrichtung der (extern angeschlossenen) Hydraulikpumpe P ist hier stromab des Sperrventils 6 (sowie möglichst nahe des Manipulators 3) an die Hydraulikleitung 4 ein Entlüftungsventil 7 angeschlossen, durch das im Bedarfsfall ansonsten in der Hydraulikleitung 4 eingesperrte Luft in die Umgebung gelangen kann. Auch dies wurde weiter oben bereits kurz erläutert.

Auch das Ausführungsbeispiel nach **Fig.4** weist einen Manipulator 3 auf, der als hydraulisch betätigte Schneide-Einrichtung ausgebildet ist. Hier ist eine insbesondere für diesen Manipulator 3 vorgesehene Leitung 21' vorgesehen, welche durch die übliche Befüll- und Entnahmevorrichtung 9 des Drucktanks 1 hindurch in dessen Speichervolumen geführt und an ihrem anderen freien Ende verschlossen ist. Im Bedarfsfall durchtrennt der Manipulator 3 diesen Leitungs-Abschnitt 21' bzw. diese Leitung 21' (analog der VerbindungsLeitung 21 in Fig.1).

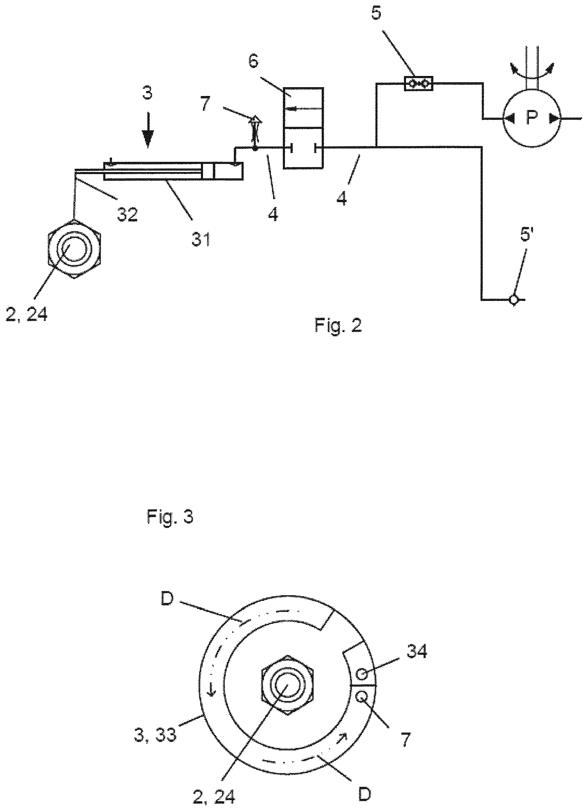

Nunmehr auf das Ausführungsbeispiel nach **Fig.2** eingehend ist hierin wie bei Fig.1 die Hydraulikleitung 4 mit den beiden Anschlussmöglichkeiten 5, 5' sowie dem Sperrventil 6 und dem Entlüftungsventil 7 dargestellt und weiterhin auch eine angeschlossene externe Hydraulikpumpe P. Hier nicht gezeigt ist der in Fig.1 dargestellte Tank 1, sondern nur dessen Sicherheits-Entlastungseinrichtung 2, und auch von dieser nur ein für die vorliegende Erfindung benötigtes Element, nämlich ein Schraubenkopf 24, mittels welchem bzw. genauer mittels zumindest eines zum Schraubenkopf 24 gehörenden nicht gezeigten Gewindeabschnitts die (bzw. eine grundsätzlich beliebig gestaltete) Sicherheits-Entlastungseinrichtung 2 in eine Durchtrittsöffnung der (nicht gezeigten) Wand des (nicht gezeigten) Tanks (1) eingeschraubt ist. Gezeigt ist ferner der Manipulator 3, der aus einem an die Hydraulikleitung 4 angeschlossenen Hydraulikzylinder 31 sowie einem mit dessen verlagerbarem Kolben verbundenen Getriebeelement 32 besteht, welches seinerseits mit dem Schraubenkopf 24 geeignet verbunden ist bzw. solchermaßen an diesem angreift, dass eine durch die Hydraulikpumpe P (bei geöffnetem Sperrventil 6) initiierte Verlagerung des Kolbens des Hydraulikzylinders 31 ein Herausdrehen der Sicherheits-Entlastungseinrichtung 2 aus der Tank-Wand bewirkt, so dass über die dann offene weiter oben genannte Durchtrittsöffnung der im Tank (1) gespeicherte Wasserstoff aus dem Tank austreten kann.

In **Fig.3** ist eine gegenüber Fig.2 abgewandelte Ausführungsform des Manipulators 3 und ferner nur noch der Schraubenkopf 24 der analog Fig.2 gestalteten Sicherheits-Entlastungseinrichtung 2 dargestellt. Hier ist der Manipulator 3 als hydraulischer Kreiskolbenzylinder 33 ausgebildet, dessen in einem kreisringförmigen Zylinder durch Anlegen von Hydraulikmedium unter Druck gemäß Pfeilrichtung D verlagerbarer Kolben ausgelegt ist, den Schraubenkopf 24, auf welchem ein Mitnahmeelement des besagten Kolbens bspw. formschlüssig aufsitzt (bzw. allgemein mit dem der Kolben geeignet bewegungsübertragend verbunden ist), mitzunehmen, so dass der Kolben mit seiner vollständigen Verlagerung den Schraubenkopf 24 um nahezu 360 Winkelgrade verdrehen kann. Entsprechend ist/sind der bzw ggf. mehrere parallele (unterhalb des Schraubenkopfes 24 liegende) Gewindegang bzw. Gewindegänge der Sicherheits-Entlastungseinrichtung 2 ausgelegt, mit welchem/welchen diese in der Tankwand verschraubt ist, d.h. mit eine nahezu vollständigen Umdrehung gibt die Sicherheits-Entlastungseinrichtung 2 die genannte Durchtrittsöffnung in der Tank-Wand frei. Vom hydraulischen Kreiskolbenzylinder 33 ist in Fig. 3 im Übrigen noch dessen Hydraulikanschluss 34 für die Hydraulikleitung 4 sowie deren Entlüftungsventil 7 schematisch dargestellt.

An einem erfindungsgemäßen Kraftfahrzeug können im Falle eines Unfalls desselben Rettungs- und Bergungskräfte eine schnelle und sichere Druckentlastung des Fahrzeug-Drucktanks situationsabhängig sicher durchführen. Danach geht keine Gefahr mehr vom Drucktank aus und das weitere Verfahren mit Bergung und Rettung von Verletzten und Fahrzeug kann mit herkömmlichen Methoden ohne jegliche Einschränkung durchgeführt werden. Ferner können Bergungs- und Rettungskräfte bei einem thermischen Ereignis auch die Druckentlastung des Tanks auslösen, ohne auf die Funktion der Sicherheits-Entlastungseinrichtung angewiesen zu sein oder auf diese warten zu müssen. Mittels der extern angeschlossenen Hydraulikpumpe und einer ausreichend langen Hydraulikleitung von der Hydraulikpumpe P zur Anschlussmöglichkeit 5, 5' des Fahrzeugs kann die Ferndruckentlastung des Drucktanks 1 aus sicherer Entfernung bedient werden. Vorteilhafterweise ist eine einfache robuste Hydrauliktechnologie vorgesehen, die sich durch minimale Ausfallwahrscheinlichkeit auszeichnet und sogar nachrüstbar ist.

## Patentansprüche

1. Kraftfahrzeug mit einem Drucktank (1), in welchem ein Energieträger zur Versorgung zumindest eines letztlich dem Antrieb des Fahrzeugs dienenden Energiewandlers unter hohem Druck in der Größenordnung von 300 bar und mehr speicherbar ist, welcher Drucktank (1) eine Sicherheits-Entlastungseinrichtung (2) aufweist, welche bei Vorliegen eines kritischen Zustands, insbesondere bei hohen bspw. bei einem Brand auftretenden Temperaturen, öffnet oder geöffnet wird und zumindest eine Teilmenge des gespeicherten Brennstoffs aus dem Tank (1) entweichen lässt,
**dadurch gekennzeichnet, dass** das Kraftfahrzeug zumindest eine Anschlussmöglichkeit (5, 5') für eine externe Fluiddruckquelle (P) sowie einen durch eine angeschlossene Fluiddruckquelle (P) betätigbaren Manipulator (3) aufweist, welcher mit Betätigung ein Öffnen der Sicherheits-Entlastungseinrichtung (2) bewirkt, und wobei der Manipulator (3) ausgebildet ist, die in der Wand des Tanks verschraubte Sicherheits-Entlastungseinrichtung (2, 24) aufzuschrauben.

2. Kraftfahrzeug nach Anspruch 1, wobei in einer von der Anschlussmöglichkeit (5, 5') zum Manipulator (3) führenden Fluidleitung (4) ein üblicherweise geschlossenes Sperrventil (6) vorgesehen ist, welches im Falle eines von einer Steuereinheit erkannten Unfalls des Fahrzeugs durch diese Steuereinheit geöffnet wird.

3. Kraftfahrzeug nach Anspruch 2 mit einer elektronischen Steuereinheit, welche im Falle eines mittels geeigneter Sensorik erkannten Unfalls des Fahrzeugs oder einer sonstigen Schädigung des Drucktanks (1) das Sperrventil (6) in der zum Manipulator (3) führenden Fluidleitung (4) öffnet.

4. Kraftfahrzeug nach Anspruch 1
mit einem nach Art eines hydraulischen Kreiskolbenzylinders (33) gestalteten Manipulator (3) und einer Sicherheits-Entlastungseinrichtung (2, 24), welche mit zumindest einem sich zumindest näherungsweise über 360 Winkelgrade erstreckenden Gewindegang in der Tank-Wand verschraubt ist.

5. Kraftfahrzeug nach einem der vorangegangenen Ansprüche, wobei der Manipulator (3) ausgebildet ist, eine mit dem Speichervolumen des Tanks (1) verbundene Leitung (21) aufzutrennen.

6. Kraftfahrzeug nach einem der vorangegangenen Ansprüche mit einem Entlüftungsventil (7) in der von der Anschlussmöglichkeit (5, 5') zum Manipulator (3) führenden Fluidleitung (4), wobei als Fluid der Fluiddruckquelle ein Hydraulikmedium vorgesehen ist.

## Claims

1. Motor vehicle having a pressure tank (1) in which an energy carrier for supply to at least one energy converter, which ultimately serves for the propulsion of the vehicle, can be stored at high pressure in the range of 300 bar or higher, which pressure tank (1) has a safety release device (2) which, in the presence of a critical state, in particular in the presence of high temperatures, for example temperatures which arise in the event of a fire, opens or is opened and allows at least a partial quantity of the stored fuel to escape from the tank (1),
**characterized in that** the motor vehicle has at least one connection means (5, 5') for an external fluid pressure source (P) and a manipulator (3) which is actuatable by a connected fluid pressure source (P) and which, when actuated, causes an opening of the safety release device (2), and wherein the manipulator (3) is designed to unscrew the safety release device (2, 24) that has been screwed into the wall of the tank.

2. Motor vehicle according to Claim 1, wherein, in a fluid line (4) that leads from the connection means (5, 5') to the manipulator (3), there is arranged a normally-closed shut-off valve (6) which, in the event of an accident of the vehicle being detected by a control unit, is opened by said control unit.

3. Motor vehicle according to Claim 2, having an electronic control unit which, in the event of an accident of the vehicle being detected by means of suitable sensors, or in the event of some other damage to the pressure tank (1), opens the shut-off valve (6) in the fluid line (4) leading to the manipulator (3).

4. Motor vehicle according to Claim 1 having a manipulator (3), which is configured in the manner of a hydraulic circular-piston cylinder (33), and having a safety release device (2, 24), which is screwed with at least one thread flight, which extends at least approximately over 360 angular degrees, into the tank wall.

5. Motor vehicle according to any one of the preceding claims, wherein the manipulator (3) is designed to sever a line (21) which is connected to the storage volume of the tank (1).

6. Motor vehicle according to any one of the preceding claims, having a ventilation valve (7) in the fluid line (4) leading from the connection means (5, 5') to the manipulator (3), wherein a hydraulic medium is provided as fluid of the fluid pressure source.

## Revendications

1. Véhicule automobile comprenant un réservoir sous pression (1) dans lequel un vecteur d'énergie, destiné à alimenter au moins un convertisseur d'énergie dont l'utilisation finale est l'entraînement du véhicule, peut être stocké à une pression élevée de l'ordre de grandeur de 300 bars et plus, lequel réservoir sous pression (1) comporte un dispositif de décharge de sécurité (2) qui s'ouvre ou est ouvert en présence d'un état critique, en particulier à des températures élevées, par exemple qui surviennent lors d'un incendie, et qui peut dégager du réservoir (1) au moins une quantité partielle du carburant,
**caractérisé en ce que** le véhicule automobile présente au moins une option de raccordement (5, 5') d'une source de pression de fluide extérieure (P) et un manipulateur (3) qui peut être actionné par une source de pression de fluide raccordée (P) et qui provoque, lorsqu'il est actionné, l'ouverture du dispositif de décharge de sécurité (2), et le manipulateur (3) étant conçu pour dévisser le dispositif de décharge de sécurité (2, 24) vissé dans la paroi du réservoir.

2. Véhicule automobile selon la revendication 1, une vanne d'arrêt (6), généralement fermée, étant prévue dans une conduite de fluide (4) allant de l'option de raccordement (5, 5') au manipulateur (3) et étant ouverte par une unité de commande dans le cas d'un accident du véhicule détecté par cette unité de commande.

3. Véhicule automobile selon la revendication 2 comprenant une unité de commande électronique qui ouvre la vanne d'arrêt (6) située dans la conduite de fluide (4) allant au manipulateur (3) dans le cas d'un accident de véhicule détecté au moyen de capteurs appropriés ou dans le cas d'autres dommages au réservoir sous pression (1).

4. Véhicule automobile selon la revendication 1 comprenant
un manipulateur (3) conçu à la manière d'un cylindre à piston rotatif (33) et un dispositif de décharge de sécurité (2, 24) qui est vissé dans la paroi du réservoir avec au moins un pas de filetage s'étendant au moins approximativement sur 360 degrés.

5. Véhicule automobile selon l'une des revendications précédentes, le manipulateur (3) étant conçu pour séparer une conduite (21) reliée au volume de stockage du réservoir (1).

6. Véhicule automobile selon l'une des revendications précédentes comprenant une vanne de purge (7) située dans la conduite de fluide (4) allant de l'option de raccordement (5, 5') au manipulateur (3), un fluide hydraulique étant prévu comme fluide de la source de pression de fluide.
